# EUROPÄISCHE PATENTSCHRIFT

(11) **EP 1 537 956 B1**
(45) Veröffentlichungstag und Bekanntmachung des Hinweises auf die Patenterteilung: **18.01.2012**
(21) Anmeldenummer: 04106300.9
(22) Anmeldetag: 06.12.2004
(51) Int. Cl.: B25D 17/08

(54) **Einsteckende für ein drehendes und/oder schlagendes Werkzeug**
Shank for a percussion, rotary, or rotary percussion tool
Tige pour un outil à percussion, un outil rotatif ou un outil à percussion rotatif

(30) Priorität: 05.12.2003 DE 10357380
(43) Veröffentlichungstag der Anmeldung: 08.06.2005
(73) Patentinhaber: HILTI Aktiengesellschaft, 9494 Schaan (LI)
(72) Erfinder: Kleine, Werner, 28832 Achim (DE); Britten, Werner, 86899 Landsberg (DE)
(74) Vertreter: Wildi, Roland

(56) Entgegenhaltungen:
- EP-A2- 0 171 358
- WO-A-96/08343
- WO-A-99/28093
- DE-A1- 2 551 125
- DE-A1- 3 429 419
- DE-A1- 3 716 915
- DE-A1- 4 303 545
- DE-A1- 4 338 818
- US-A- 4 655 651

## Beschreibung

Die Erfindung bezeichnet ein Einsteckende für ein zumindest teilweise drehend und/oder schlagend angetriebenes Werkzeug, wie einen Bohrmeissel, Meissel oder eine Schneidbohrkrone zur Bearbeitung von Gestein, Beton oder Mauerwerk.

Üblicherweise weist ein drehend und/oder schlagend angetriebenes Werkzeug ein sich längs einer Achse erstreckendes Einsteckende für eine drehende und/oder schlagende Handwerkzeugmaschine auf. Zur wahlfreien Verwendung einer vielfältigen Werkzeugpalette sollte die Schnittstelle zwischen dem Einsteckende des Werkzeugs und der Werkzeugaufnahme der Handwerkzeugmaschine zumindest innerhalb bestimmter Leistungsklassen kompatibel sein. Nach der DE3429419 weist ein zur Verwendung in einem Dreibacken-Spannfutter ausgelegtes Einsteckende eines längs einer Achse drehend und/oder schlagend angetriebenen Werkzeugs, welches sich längs der Achse innerhalb eines maximalen Führungsdurchmessers erstreckt, um 120° umlaufend versetzte, an einem Axialverriegelungsende zum freien Stirnende hin axial geschlossene, Verriegelungsnuten und zum freien Stirnende hin axial offene V-förmige Führungsnuten mit einer Tangentialkraftkontaktfläche auf, wobei die Führungsnuten bei einer, dem Elffachen des Führungsdurchmessers betragenden, Länge dem Axialverriegelungsende werkzeugseitig vorgelagert sowie über eine, dem Zwölffachen des Führungsdurchmessers betragenden, Kontaktlänge schmaler als ein Viertel des Führungsdurchmessers ausgebildet sind. Derartige, auch zur Verwendung in einem üblichen Dreibacken-Spannfutter einer Schlagbohrmaschine ausgelegte, Einsteckenden sind als technische Kompromisslösung nicht Gegenstand dieser Erfindung. Die derzeit bei Bohrhammersystemen weltweit meistgenutzten, praktisch standardisierten Einsteckenden und zugeordneten Werkzeugaufnahmen beziehen sich auf die DE2551125A1, die die Merkmale des Oberbegriffes von Anspruch 1 offenbart, und die DE3716915A1, welche eine werkzeugseitige, zylindermantelförmige Führungsfläche, zum freien Stirnende hin axial geschlossene Verriegelungsnuten und zum freien Stirnende hin axial offene, trapezförmige Drehmitnahmenuten aufweisen, wobei zumindest ein radial versetzbarer Verriegelungskörper der zugeordneten Werkzeugaufnahme in eine Verriegelungsnut eingreifen und die axiale Beweglichkeit des Werkzeugs in der Werkzeugaufnahme begrenzen kann.

Die praktisch standardisierten Einsteckenden und Werkzeugaufnahmen nach der DE2551125A1 weisen einen Führungsdurchmesser von 10 mm auf, wobei je genau zwei gleichförmige, diametral gegenüberliegende Verriegelungsnuten und Drehmitnahmenuten symmetrisch umfänglich verteilt sind. An die bezüglich der Verriegelungsnuten geringfügig längeren Drehmitnahmenuten schliesst sich werkzeugseitig eine bis zum werkzeugseitigen Ende des Einsteckendes erstreckende Führungsfläche an, welche nicht zur Drehmomentübertragung beiträgt. Diese Einsteckende waren ursprünglich für einen Bohrerdurchmesser bis zu 17 mm ausgelegt und sind somit dem Bereich der kleinen, leistungsschwächeren Bohrhämmer mit einer Leistung kleiner 650 W zuzuordnen. Die zunehmend leistungsstärkeren Handwerkzeugmaschinen, insbesondere Bohrhämmer, gestatten es jedoch inzwischen, in bestimmten Betriebsmodi hohe Drehmomente auf ein Werkzeug zu übertragen. Inzwischen hat sich eine Erweiterung des praktischen Einsatzbereiches dieser Bohrhämmer bis zu einem Bohrerdurchmesser von 30 mm ergeben. Zudem werden beim Entfernen eines Werkzeugs aus dem Werkstück, insbesondere bei im Bohrloch verklemmten Werkzeugen, vom Nutzer mittels einer in sich arretierten Handwerkzeugmaschine hohe Drehmomente auf das Werkzeug aufgebracht. Es hat sich gezeigt, dass Bohrerdurchmesser über 17 mm vermehrt zu Schädigungen führen, konkret zum Bruch des Einsteckendes im Bereich der Verriegelungsnut und zu Zerstörungen innerhalb der Werkzeugaufnahme. Diese Brüche sind umso ärgerlicher, als das abgebrochene Ende im Inneren des Bohrhammers verbleibt und nur durch eine Demontage des Vorderteils des Bohrhammers aus der Werkzeugaufnahme entfernt werden kann. Selbst in den Fällen, in denen es beim Einsatz von Bohrern größerer Bohrerdurchmesser nicht zum Bruch kommt, zeigt sich eine plastische Deformation am Einsteckende, die zu einem unverhältnismäßig grossen Verschleiss der Werkzeugaufnahme führt, weswegen diese Werkzeuge oftmals nur schwer aus der Werkzeugaufnahme entfernt werden können.

Die ebenfalls praktisch standardisierten Einsteckenden und Werkzeugaufnahmen nach der DE3716915A1 weisen einen Führungsdurchmesser von 18 mm auf, wobei genau zwei gleichförmige, diametral gegenüberliegende Verriegelungsnuten vorhanden sind, zwischen diesen in einer Schnitthälfte genau eine und in der anderen Schnitthälfte genau zwei Drehmitnahmenuten symmetrisch angeordnet sind. Diese Einsteckenden sind für leistungsfähigere, grössere Bohrhämmer und der Übertragung höherer Drehmomente ausgelegt, wobei die in den obenstehenden Absätzen erläuterten Probleme bei noch höheren Leistungsklassen bzw. Drehmomenten naturgemäss ebenfalls auftreten. Werkzeuge mit einem Führungsdurchmesser von 18 mm, aber einem mit kleiner 14 mm wesentlich kleineren Bohrerdurchmesser weisen jedoch eine schlechte Schlagimpulsübertragung auf. Zudem wären derartige, unproportionierte Werkzeuge in der Herstellung unökonomisch.

Die dabei auftretenden Belastungen setzen sich wie folgt zusammen: Zum einen erfolgt eine Belastung des Einsteckendes durch die Schlagenergie des Bohrhammers, zum anderen erfolgt eine, durch das an der Schneide auftretende Drehmoment bestimmte, von den Drehkeilen der Werkzeugaufnahme ausgehende Torsionsbelastung, die sich auf die Drehmitnahmenuten des Einsteckendes überträgt. Diese Drehmomentbelastung ist dann besonders hoch, wenn es z. B. zum Verkeilen der Schneide beim Armierungsbohren kommt. Als zusätzliche Belastung tritt im Fall des Verkeilens in Armierung, beispielsweise beim Versuch des Zurückziehens des Bohrhammers, zudem noch eine von dem Verriegelungskörper auf das Axialverriegelungsende der Verriegelungsnut einwirkende Belastung auf diesen gefährdeten, hinteren Querschnitt der Verriegelungsnut auf. Die langjährigen Erfahrungen haben nunmehr gezeigt, dass durch diese kombinierten, mehrachsigen Belastungen besonders der im Bereich des Axialverriegelungsendes angeordnete Querschnitt gefährdet ist. Die bruchmechanische Ursache dessen liegt vermutlich in diesem am Axialverriegelungsende lokal ausgeprägten, mehrachsigen Spannungszustand, der über die Querkontraktion eine lokale Versteifung bewirkt, welche einen bevorzugten Rissinitiator darstellt und somit die Dauerfestigkeit des wechselbeanspruchten Einsteckendes beschränkt.

Nach der DE4338818 weist ein zur Aufnahme in eine Werkzeugaufnahme, welche ebenfalls für ein Einsteckende geringeren Führungsdurchmessers geeignet ist, ausgebildetes Einsteckende grösseren Führungsdurchmessers extra tiefe Drehmitnahmenuten und Verriegelungsnuten auf. Der in diesem Axialbereich extrem geschwächte Querschnitt weist wie oben ausgeführt eine schlechte Schlagimpulsübertragung und eine geringe Bruchfestigkeit auf.

Die Aufgabe der Erfindung besteht in der Realisierung eines zur schädigungsarmen Übertragung hoher Drehmomente sowie optimaler Schlagimpulsübertragung ausgelegten Einsteckendes.

Die Aufgabe wird im Wesentlichen durch die Merkmale des Anspruchs 1 gelöst. Vorteilhafte Weiterbildungen ergeben sich aus den Unteransprüchen.

So weist ein Einsteckende eines zumindest teilweise längs einer Achse drehend und/oder schlagend angetriebenen Werkzeugs, welches sich längs der Achse innerhalb eines maximalen Führungsdurchmessers erstreckt sowie zumindest eine, an einem Axialverriegelungsende zum freien Stirnende hin axial geschlossene, Verriegelungsnut für Verriegelungsmittel einer Werkzeugaufnahme und Drehmitnahmenuten für Drehmitnahmemittel derselben Werkzeugaufnahme mit einer Nutenbreite mit zumindest einer Tangentialkraftkontaktfläche aufweist, zumindest zwei Drehmitnahmenuten auf, welche bei einer, zumindest dem Dreifachen des Führungsdurchmessers betragenden, Länge dem Axialverriegelungsende werkzeugseitig vorgelagert sowie zumindest über eine, zumindest dem 1.5-fachen des Führungsdurchmessers betragenden, Kontaktlänge breiter als ein Viertel des Führungsdurchmessers ausgebildet sind.

Durch die zumindest in einer wesentlichen Kontaktlänge dem Axialverriegelungsende werkzeugseitig vorgelagerten Drehmitnahmenuten wird zumindest der wesentliche Teil des Drehmoments ausschliesslich werkzeugseitig vom Axialverriegelungsende eingeprägt. Der bruchmechanisch kritische Axialbereich des mehrachsigen Spannungszustandes am Axialverriegelungsende ist somit notwendig geringeren Belastungen ausgesetzt, wodurch bei gegebener Dauerfestigkeitsgrenze ein höheres Drehmoment einprägbar ist. Insbesondere sind dadurch höhere Drehmomente bei geringerem Führungsdurchmesser schädigungsarm einprägbar, wodurch das Schlagimpulsverhalten bei kleinen Bohrerdurchmessern verbessert wird.

Vorteilhaft ist eine axiale Führungslänge zwischen einem werkzeugseitigen Führungsende mit dem Führungsdurchmesser bis zu einem werkzeugseitigen Nutende zumindest zweier Drehmitnahmenuten kleiner dem 1.5-fachen des Führungsdurchmessers, wodurch bis nahe an das werkzeugseitige Ende des Einsteckendes ein Drehmoment einprägbar ist.

Vorteilhaft ist das Nutende von einem werkzeugseitigen Verriegelungsende zumindest um das 1.5-fache des Führungsdurchmessers axial werkzeugseitig versetzt, wodurch in diesem Axialbereich der Querschnitt nicht durch Verriegelungsnuten geschwächt ist, wodurch sich die Torsionssteifigkeit erhöht und höhere Drehmomente verschleissarm einprägbar sind.

Vorteilhaft verläuft zumindest über die Kontaktlänge die Tangentialkraftkontaktfläche sowohl parallel als auch senkrecht zur Achse, wodurch die Flächennormale der Tangentialkraftkontaktfläche exakt tangential orientiert ist und somit keine verschleissbegünstigenden Scherkräfte bei der Einprägung des Drehmoments induziert werden.

Vorteilhaft beträgt zumindest über die Kontaktlänge die radiale Nutentiefe jeder Drehmitnahmenut zwischen dem 0.5 bis 1.0 fachen der Nutbreite, wodurch hohe Drehmomente ohne wesentliche Schwächung des Querschnitts bei hinreichender Biegesteifigkeit der in die Drehmitnahmenut eingreifenden Drehmitnahmestege der Werkzeugaufnahme einprägbar sind.

Vorteilhaft sind zumindest drei Drehmitnahmenuten vorhanden, die weiter vorteilhaft spiegelsymmetrisch angeordnet sind, wodurch ein höheres Drehmoment einprägbar ist.

Vorteilhaft sind zwei, diametral versetzte Verriegelungsnuten vorhanden, wodurch das Einsteckende ergonomisch günstig in zwei um 180° versetzte Orientierungen in die Werkzeugaufnahme einführbar ist.

Vorteilhaft gehen die Verriegelungsnuten werkzeugseitig in die Drehmitnahmenuten über, wodurch der Querschnitt weniger geschwächt wird.

Alternativ vorteilhaft sind die Drehmitnahmenuten von den Verriegelungsnuten werkzeugseitig axial beabstandet, wodurch die Funktionsbereiche voneinander getrennt und somit technologisch einfach herstellbar sind.

Vorteilhaft sind die Drehmitnahmenuten von den Verriegelungsnuten, weiter vorteilhaft symmetrisch, umfänglich versetzt, wodurch für die Drehmitnahmemittel und die Verriegelungsmittel in der zugeordneten Werkzeugaufnahme mehr Freiraum besteht.

Vorteilhaft sind die Drehmitnahmenuten maschinenseitig offen, wodurch die Drehmitnahmemittel vom Stirnende des Einsteckendes in die Drehmitnahmenuten einführbar sind.

Die Erfindung wird bezüglich eines vorteilhaften Ausführungsbeispiels näher erläutert mit:
Fig. 1 a als Einsteckende mit Fig. 1b als vergrösserter Querschnitt
Fig. 2 als Variante
Fig. 3a als Variante mit Fig. 3b als vergrösserter Querschnitt

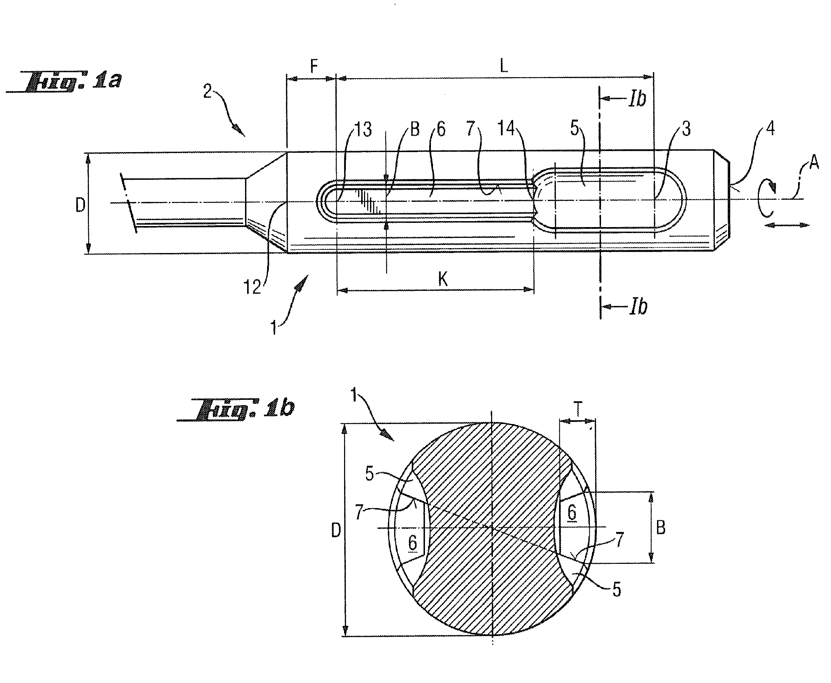

Nach Fig. 1a, Fig. 1b weist ein Einsteckende 1 eines längs einer Achse A drehend und schlagend angetriebenen Werkzeugs 2, welches sich längs der Achse A mit einem maximalen Führungsdurchmesser D erstreckt, jeweils genau zwei gleiche, diametral angeordnete, an einem Axialverriegelungsende 3 zum freien Stirnende 4 hin axial geschlossene, Verriegelungsnuten 5 und Drehmitnahmenuten 6 mit einer sowohl parallel als auch senkrecht zur Achse A verlaufenden Tangentialkraftkontaktfläche 7 auf. Zwischen einem werkzeugseitigen Führungsende 12 mit dem Führungsdurchmesser D bis zu einem werkzeugseitigen Nutende 13 beider Drehmitnahmenuten 6 ist eine axiale Führungslänge F der Hälfte des Führungsdurchmessers D ausgebildet. Das Nutende 13 ist von einem werkzeugseitigen Verriegelungsende 14 um mehr als das Doppelte des Führungsdurchmessers D axial werkzeugseitig versetzt. Über eine Kontaktlänge K vom Doppelten des Führungsdurchmessers D hin sind beide Drehmitnahmenuten 6 mit einer konstanten Nutenbreite B von einem Drittel des Führungsdurchmessers D ausgebildet und bis zu einer Länge L, welche länger als das Dreifache des Führungsdurchmessers D ist, dem Axialverriegelungsende 3 werkzeugseitig vorgelagert. Die Verriegelungsnuten 5 gehen jeweils werkzeugseitig in die Drehmitnahmenuten 6 über, wobei eine radiale Nutentiefe T beider Drehmitnahmenuten 6 über die gesamte Kontaktlänge K die Hälfte der Nutbreite B beträgt.

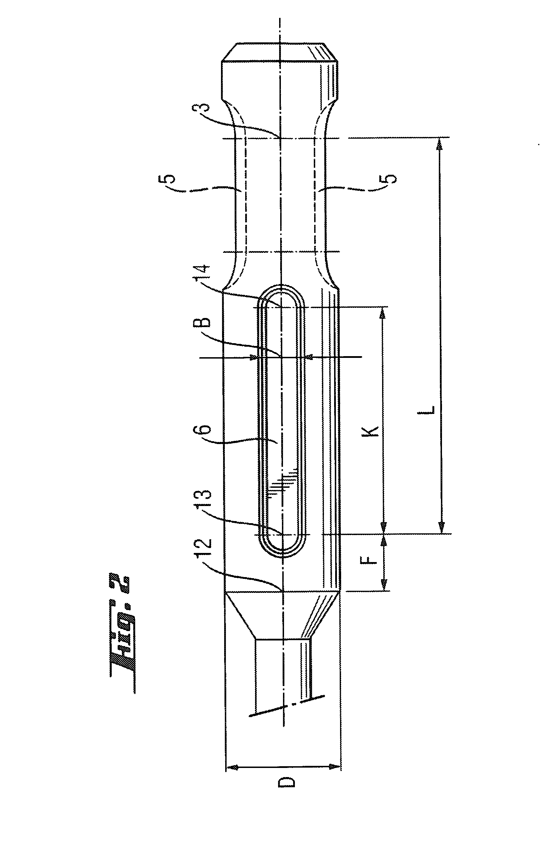

Nach Fig. 2 ist die Drehmitnahmenut 6 mit der, ein Drittel des Führungsdurchmessers D betragenden, Nutbreite B von den beiden, diametral gegenüberliegenden Verriegelungsnuten 5 werkzeugseitig axial beabstandet sowie um 90° umfänglich versetzt, wobei die Führungslänge F die Hälfte, die Kontaktlänge K das Doppelte und die Länge L das 3.5-fache des Führungsdurchmessers D ist.

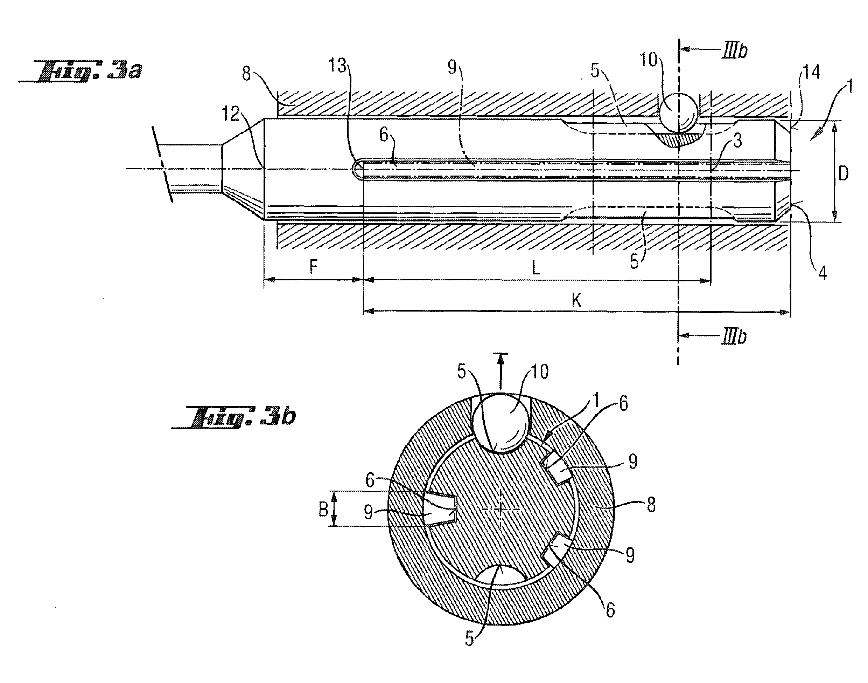

Nach den Fig. 3a, 3b ist ein spiegelsymmetrisches Einsteckende 1 in eine zugeordnete, angedeutete Werkzeugaufnahme 8 mit Drehmitnahmemitteln in Form von drei radial nach innen einkragenden, werkzeugseitig vorgelagerten Drehmitnahmestegen 9 und einem radial versetzbaren Verriegelungsmittel in Form einer Verriegelungskugel 10 eingeführt. Dazu sind die Drehmitnahmenuten 6 mit einer, breiter einem Fünftel des Führungsdurchmessers D betragenden, konstanten Nutenbreite B maschinenseitig bis zum freien Stirnende 4 hin offen. Die drei spiegelsymmetrisch angeordneten Drehmitnahmenuten 6 sind von den beiden diametral gegenüberliegenden Verriegelungsnuten 5 symmetrisch umfänglich versetzt. Die Führungslänge F ist das Einfache, die Kontaktlänge K das Vierfache und die Länge L das 3.5-fache des Führungsdurchmessers D, wobei das Nutende 13 von dem werkzeugseitigen Verriegelungsende 14 um das Doppelte des Führungsdurchmessers D axial werkzeugseitig versetzt ist.

## Patentansprüche

1. Einsteckende eines zumindest teilweise längs einer Achse (A) drehend und/oder schlagend angetrielienen Werkzeugs (2), welches sich längs der Achse (A) innerhalb eines maximalen Führungsdurchmessers (D) erstreckt sowie zumindest eine, an einem Axialverriegelungsende (3) zum freien Stirnende (4) hin axial geschlossene, Verriegelungsnut (5) Für Verriegelungsmittel einer Werkzeug aufnahme (8) und Drehmitnahmenuten (6) für Drehmitnahmemittel derselben Werkzeug aufnahme (8) mix einer Nutenbreite (B) mit zumindest einer Tangentialkraftkontaktfläche (7) aufweist, **dadurch gekennzeichnet, dass** zumindest zwei Drehmitnahmenuten (6) bei einer, zumindest dem Dreifachen des Führungsdurchmessers (D) betragenden, Länge (L) dem Axialverriegelungsende (3) werkzeugseitig vorgelagert sowie zumindest über eine, zumindest dem 1.5-fachen des Führungsdurchmessers (D) betragenden, Kontaktlänge (K) breiter als ein Viertel des Führungsdurchmessers (D) ausgebildet sind.

2. Einsteckende nach Anspruch 1, **dadurch gekennzeichnet, dass** eine axiale Führungslänge (F) zwischen einem werkzeugseitigen Führungsende (12) mit dem Führungsdurchmesser (D) bis zu einem werkzeugseitigen Nutende (13) zumindest zweier Drehmitnahmenuten (6) kleiner dem 1.5-fachen des Führungsdurchmessers (D) ist.

3. Einsteckende nach Anspruch 1 oder 2, **dadurch gekennzeichnet, dass** das Nutende (13) von einem werkzeugseitigen Verriegelungsende (14) zumindest um das 1.5-fache des Führungsdurchmessers (D) axial werkzeugseitig versetzt ist.

4. Einsteckende nach einem der Ansprüche 1 bis 3, **dadurch gekennzeichnet, dass** die Tangentialkraftkontaktfläche (7) zumindest über die Kontaktlänge (K) sowohl parallel als auch senkrecht zur Achse (A) verläuft.

5. Einsteckende nach einem der vorherigen Ansprüche, **dadurch gekennzeichnet, dass** zumindest über die Kontaktlänge (K) eine radiale Nutentiefe (T) jeder Drehmitnahmenut (6) zwischen dem 0.5 bis 1.0 fachen der Nutbreite (B) beträgt.

6. Einsteckende nach einem der vorherigen Ansprüche, **dadurch gekennzeichnet, dass** zumindest drei Drehmitnahmenuten (6) vorhanden sind, die optional spiegelsymmetrisch angeordnet sind.

7. Einsteckende nach einem der vorherigen Ansprüche, **dadurch gekennzeichnet, dass** zwei, diametral versetzte Verriegelungsnuten (5) vorhanden sind.

8. Einsteckende nach einem der Ansprüche 1 bis 7, **dadurch gekennzeichnet, dass** die Verriegelungsnuten (5) werkzeugseitig in die Drehmitnahmenuten (6) übergehen.

9. Einsteckende nach einem der vorherigen Ansprüche, **dadurch gekennzeichnet, dass** die Drehmitnahmenuten (6) von den Verriegelungsnuten (5) werkzeugseitig axial beabstandet sind.

10. Einsteckende nach einem der vorherigen Ansprüche, **dadurch gekennzeichnet, dass** die Drehmitnahmenuten (6) von den Verriegelungsnuten (5) umfänglich versetzt sind, optional symmetrisch umfänglich versetzt.

11. Einsteckende nach einem der vorherigen Ansprüche, **dadurch gekennzeichnet, dass** die Drehmitnahmenuten (6) maschinenseitig offen sind.

## Claims

1. Shank of a tool (2) driven in rotation and/or percussively at least partly along an axis (A), [said shank] extending along the axis (A) within a maximum guide diameter (D) and having at least one locking groove (5), axially closed towards the free end (4) [of the shank] at an axial-locking end (3), for locking means of a tool holder (8), and rotary entrainment grooves (6) with a groove width (B), with at least one tangential-force contact face (7), for rotary entrainment means of same tool holder (8), **characterized in that** at least two entrainment grooves (6) are formed which at their toolside end are located a length (L) equal to at least three times the guide diameter (D) forward of the axial-locking end (3) and are wider than one quarter of the guide diameter (D) over a contact length (K) equal to at least 1.5 times the guide diameter (D).

2. Shank according to Claim 1, **characterized in that** an axial guide length (F) between a toolside guide end (12) with the guide diameter (D) [and] a toolside groove end (13) of at least two entrainment grooves (6) is less than 1.5 times the guide diameter (D).

3. Shank according to Claim 1 or Claim 2, **characterized in that** the groove end (13) is axially distanced at least 1.5 times the guide diameter (D) towards the tool end from a toolside locking end (14).

4. Shank according to any one of Claims 1 to 3, **characterized in that** the tangential-force contact face (7) extends both parallel with and perpendicular to the axis (A) at least over the contact length (K).

5. Shank according to any one of the preceding claims, **characterized in that** a radial groove depth (T) of each entrainment groove (6) is between 0.5 and 1.0 times the groove width (B) at least over the contact length (K).

6. Shank according to any one of the preceding claims, **characterized in that** at least three entrainment grooves (6), optionally arranged with mirror symmetry, are provided.

7. Shank according to any one of the preceding claims, **characterized in that** two diametrically pitched locking grooves (5) are provided.

8. Shank according to any one of Claims 1 to 7, **characterized in that** the locking grooves (5) merge at their toolside end with the entrainment grooves (6).

9. Shank according to any one of the preceding claims, **characterized in that** the entrainment grooves (6) are axially distanced towards the tool end from the locking grooves (5).

10. Shank according to any one of the preceding claims, **characterized in that** the entrainment grooves (6) are circumferentially offset, and optionally symmetrically circumferentially offset, from the locking grooves (5).

11. Shank according to any one of the preceding claims, **characterized in that** the entrainment grooves (6) are open at the drive end.

## Revendications

1. Extrémité d'insertion d'un outil (2) entraîné en rotation et/ou en percussion au moins partiellement le long d'un axe (A), lequel outil s'étend le long de l'axe (A) sur un diamètre de guidage maximal (D) et comporte au moins une gorge de blocage (5) axialement fermée sur une extrémité de blocage axial (3) vers une face avant libre (4) pour des moyens de blocage d'un porte-outil (8), et des gorges d'entraînement en rotation (6) pour des moyens d'entraînement en rotation dudit porte-outil (8) ayant une largeur de gorge (B) avec au moins une surface de contact de force tangentielle (7), **caractérisée en ce qu'**au moins deux gorges d'entraînement en rotation (6) ayant une longueur (L) au moins égale au triple du diamètre de guidage (D) sont formées du côté de l'outil devant l'extrémité de blocage axial (3), et ayant une longueur de contact (K) au moins égale à 1,5 fois le diamètre de guidage (D) et de largeur supérieure au quadruple du diamètre de guidage (D).

2. Extrémité d'insertion selon la revendication 1, **caractérisée en ce qu'**une longueur de guidage axiale (F) entre une extrémité de guidage côté outil (12) ayant le diamètre de guidage (D) jusqu'à une extrémité de gorge côté outil (13) d'au moins deux gorges d'entraînement en rotation (6) est plus petite que 1,5 fois le diamètre de guidage (D).

3. Extrémité d'insertion selon la revendication 1 ou 2, **caractérisée en ce que** l'extrémité de gorge (13) est axialement décalée côté outil par une extrémité de blocage côté outil (14) d'au moins 1,5 fois le diamètre de guidage (D).

4. Extrémité d'insertion selon l'une quelconque des revendications 1 à 3, **caractérisée en ce que** la surface de contact de force tangentielle (7) s'étend au moins sur la longueur de contact (K) aussi bien parallèlement que perpendiculairement à l'axe (A).

5. Extrémité d'insertion selon l'une quelconque des revendications précédentes, **caractérisée en ce qu'**une profondeur de gorge radiale (T) de chaque gorge d'entraînement en rotation (6) s'étendant au moins sur la longueur de contact (K) est comprise entre 0,5 et 1,0 fois la largeur de gorge (B).

6. Extrémité d'insertion selon l'une quelconque des revendications précédentes, **caractérisée en ce qu'**il existe au moins trois gorges d'entraînement en rotation (6) qui sont facultativement agencées de manière symétrique.

7. Extrémité d'insertion selon l'une quelconque des revendications précédentes, **caractérisée en ce qu'**il existe deux gorges de blocage diamétralement décalées (5) .

8. Extrémité d'insertion selon l'une quelconque des revendications 1 à 7, **caractérisée en ce que** les gorges de blocage (5) se confondent avec les gorges d'entraînement en rotation (6) côté outil.

9. Extrémité d'insertion selon l'une quelconque des revendications précédentes, **caractérisée en ce que** les gorges d'entraînement en rotation (6) sont axialement espacées par rapport aux gorges de blocage (5) côté outil.

10. Extrémité d'insertion selon l'une quelconque des revendications précédentes, **caractérisée en ce que** les gorges d'entraînement en rotation (6) sont décalées de manière circonférentielle par rapport aux gorges de blocage (5), facultativement décalées de manière circonférentielle et symétrique.

11. Extrémité d'insertion selon l'une quelconque des revendications précédentes, **caractérisée en ce que** les gorges d'entraînement en rotation (6) sont ouvertes du côté machine.
